# EUROPÄISCHE PATENTSCHRIFT

(11) **EP 1 982 146 B1**
(45) Veröffentlichungstag und Bekanntmachung des Hinweises auf die Patenterteilung: **03.07.2013**
(21) Anmeldenummer: 07703666.3
(22) Anmeldetag: 05.01.2007
(51) Int. Cl.: G01C 21/32, G06F 17/30, G08G 1/0969

(54) **NAVIGATIONSSYSTEM, VERFAHREN UND COMPUTERPROGRAMMPRODUKT ZUM BETREIBEN DES NAVIGATIONSSYSTEMS**
NAVIGATION SYSTEM, METHOD AND COMPUTER PROGRAM PRODUCT FOR THE OPERATION OF SAID NAVIGATION SYSTEM
SYSTÈME DE NAVIGATION, PROCÉDÉ ET PRODUIT DE PROGRAMME INFORMATIQUE DESTINÉS À L'EXPLOITATION DU SYSTÈME DE NAVIGATION

(30) Priorität: 31.01.2006 DE 102006004693
(43) Veröffentlichungstag der Anmeldung: 22.10.2008
(73) Patentinhaber: Continental Automotive GmbH, 30165 Hannover (DE)
(72) Erfinder: PFEIFLE, Martin, 93142 Maxhütte-Haidhof (DE); SASSE, Volker, 93138 Lappersdorf (DE); TANTZ, Uwe, 93152 Nittendorf (DE)
(86) Internationale Anmeldenummer: PCT/EP2007/050108
(87) Internationale Veröffentlichungsnummer: WO 2007/088088

(56) Entgegenhaltungen:
- EP-A1- 1 026 604
- US-A1- 5 485 161
- US-A1- 5 948 040

## Beschreibung

Die Erfindung betrifft ein Navigationssystem, das eine Navigationsvorrichtung umfasst. Ferner betrifft die Erfindung ein Verfahren zum Betreiben des Navigationssystems. Ferner betrifft die Erfindung ein Computerprogrammprodukt.

Aus der EP 0 766 811 B1 ist ein Streckenführungssystem bekannt. Das Streckenführungssystem weist eine Basiseinheit auf, die ausgebildet ist, um in Abhängigkeit von einer Streckenanforderung eine Strecke zu errechnen. Ferner weist das Streckenführungssystem eine erste Datenbank auf, die Karteninformationen enthält. Ferner weist das Streckenführungssystem eine Nachrichtenverbindung und eine entfernte Einheit auf, die so ausgebildet ist, dass sie eine Streckenanforderung unter Nutzung der Nachrichtenverbindung elektromagnetisch zu der Basiseinheit übermittelt und dass sie als Antwort auf die Streckenanforderung von der Basiseinheit unter Nutzung der Nachrichtenverbindung eine Strecke empfängt. Die entfernte Einheit weist eine zweite Datenbank auf, die Karteninformationen enthält. Die entfernte Einheit ist so ausgebildet, dass sie die empfangene Strecke mit der in der zweiten Datenbank enthaltenen Karteninformation vergleicht. Falls die Strecke von der zweiten Datenbank nicht ausreichend abgedeckt ist, wird sie elektromagnetisch an die Basiseinheit übermittelt unter Nutzung der Nachrichtenverbindung zur Bereitstellung von Karteninformationen von der ersten Datenbank.

Aus der EP 1 026 604 A1 ist eine Vorrichtung zum Empfang von Objektdaten, ein Verfahren zum Empfang der Objektdaten und ein computerlesbares Speichermedium mit gespeicherten Daten bekannt. Die Objektdaten werden zusammen mit einer Vielzahl von Eigenschaften bezüglich Satzelemente natürlicher Sprache kategorisiert. Eine Suche nach den Objektdaten wird mittels einfacher Suchkriterien durchgeführt.

Aus der US 5,948,040 ist ein Reisebuchungsinformationssystem und ein Reiseplanungssystem bekannt. Das System umfasst einen Computer, eine Datenbank, eine Eingabevorrichtung, ein oder mehrere Untersysteme und einen Controller zum Regulieren der Eingaben eines Benutzers. Die Datenbank umfasst topologische und geografische Daten. Die Eingaben des Benutzers können sich auf Reisedaten, Reiseplanung und/oder Aktivitäten in Bezug auf die Reise oder eine beliebige Kombination daraus beziehen. Die Untersysteme sind mit der Datenbank gekoppelt und ausgebildet die Eingaben zu verarbeiten. Abhängig von den Eingaben berechnen die Subsysteme Ausgaben für den Benutzer. Der Controller reguliert die Eingaben und die Ausgaben. Eines oder mehrere der Untersysteme umfasst Mittel, um dem Benutzer eine zeitliche Abfolge der Reise anzeigen zu lassen, zu manipulieren und zu organisieren.

Aus der US 5,485,161 ist ein Apparat zum Kontrollieren einer Höchstgeschwindigkeit eines Fahrzeugs bekannt. Die Kontrolle der Höchstgeschwindigkeit basiert auf Geschwindigkeitsbeschränkungen, die an einer Straße ausgeschrieben sind, die das Fahrzeug befährt. Der Apparat umfasst eine Positionsbestimmungs- und Geschwindigkeitsbestimmungsvorrichtung, einen Fahrzeugcomputer, der mit der Navigationsvorrichtung gekoppelt ist und eine Landkartendatenbank. Der Navigationscomputer ermittelt den aktuellen Ort und die Geschwindigkeit des Fahrzeugs. Ferner liest der Navigationscomputer aus der Datenbank die maximale Höchstgeschwindigkeit für den aktuellen Bereich aus. Diese Information wird genutzt, um die maximale Höchstgeschwindigkeit des Kraftfahrzeugs zu beschränken.

Aufgabe der Erfindung ist es, ein Navigationssystem und ein Verfahren zum Betreiben des Navigationssystems zu schaffen, das einen schnellen Zugriff auf eine große Menge an Navigationsdaten ermöglicht und das einfach ein Aktualisieren der Navigationsdaten ermöglicht.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus bezüglich eines ersten Aspekts der Erfindung durch ein Navigationssystem, das eine Navigationsvorrichtung, eine relationale Datenbank und ein Datenbankverwaltungssystem umfasst. Das Navigationssystem ist dazu ausgebildet, auf Navigationsdaten zuzugreifen, die in der relationalen Datenbank als einzelne Datensätze gespeichert sind. Die Datensätze umfassen jeweils mindestens ein Datenpaket, das eine eigene proprietäre Datenbank repräsentiert, jeweils mindestens eine Eigenschaft des entsprechenden Datenpakets und jeweils eine eindeutige Kennung des entsprechenden Datensatzes.

Dies ermöglicht, die umfangreichen Möglichkeiten der relationalen Datenbank und/oder des Datenbankverwaltungssystems zum Navigieren und/oder zum Aktualisieren von Navigationsdaten zu nutzen, die in der relationalen Datenbank gespeichert sind. Ferner ermöglicht dies, die Vorteile der relationalen Datenbank mit den Vorteilen einer proprietären Datenbank zu verknüpfen. Insbesondere ermöglicht dies, trotz der Verwendung der relationalen Datenbank mittels der Navigationsvorrichtung ausreichend schnell auf eine große Menge an Navigationsdaten zuzugreifen. Dabei hängen die Daten des Datenpakets bezüglich ihres Inhalts und/oder bezüglich ihrer räumlichen Anordnung auf dem Speichermedium zusammen.

Die Erfindung zeichnet sich aus bezüglich eines zweiten Aspekts der Erfindung durch ein Verfahren zum Betreiben des Navigationssystems. Mittels des Datenbankverwaltungssystems wird zum Betreiben des Navigationssystems auf die Navigationsdaten in der relationalen Datenbank zugegriffen abhängig von einer Anweisung der Navigationsvorrichtung. Die Navigationsvorrichtung greift mittels mindestens einer vorgegebenen Zugriffsfunktion auf Daten des Datenpakets zu, das die eigene proprietäre Datenbank repräsentiert. Dies ermöglicht ein effizientes Auswerten und Ändern und somit auch Aktualisieren der Daten des Datenpakets.

In einer vorteilhaften Ausgestaltung des zweiten Aspekts der Erfindung wird das Datenpaket komprimiert und dann gespeichert. Dies trägt dazu bei, das Datenpaket effizient zu verwenden.

In einer weiteren vorteilhaften Ausgestaltung des zweiten Aspekts der Erfindung enthält das Datenpaket Namen und/oder geografische und/oder grafische Daten. Dies trägt zu einem effizienten Verwenden der Navigationsdaten bei.

In einer weiteren vorteilhaften Ausgestaltung des zweiten Aspekts der Erfindung wird die vorgegebene Zugriffsfunktion dem Datenbankverwaltungssystem übergeben zum Zugreifen auf die Daten des Datenpakets. Dies entlastet die Navigationsvorrichtung und kann dazu beitragen, die Leistungsfähigkeit des Navigationssystems zu erhöhen.

In einer weiteren vorteilhaften Ausgestaltung des zweiten Aspekts der Erfindung wird die Zugriffsfunktion eingesetzt zum Ändern der Daten des Datenpakets. Dies ermöglicht, das Datenpaket lediglich eines Datensatzes und/oder eine kleine Datenmenge des entsprechenden Datenpakets zu ändern, ohne dass die anderen Datensätze durch die Änderung beeinflusst werden. Für ein Aktualisieren der Navigationsdaten muss dann lediglich die entsprechende Zugriffsfunktion ermittelt und vorgegeben werden.

In einer weiteren vorteilhaften Ausgestaltung des Verfahrens wird die Anweisung an das Datenbankverwaltungssystem ermittelt abhängig von einer Zugriffsart der Navigationsvorrichtung auf die Navigationsdaten. Der entsprechende Datensatz wird abhängig von der Anweisung ermittelt. Das Datenpaket des entsprechenden Datensatzes wird ausgewertet zum Ermitteln der Navigationsdaten. Dies ermöglicht, einfach auf die Navigationsdaten zuzugreifen. Die Zugriffsart kann beispielsweise repräsentativ sein für eine Abfrage und/oder für die Änderung, insbesondere für die Aktualisierung der Navigationsdaten.

In einer weiteren vorteilhaften Ausgestaltung des zweiten Aspekts der Erfindung wird der Datensatz ermittelt abhängig von einer vorgegebenen Indexstruktur. Dies kann dazu beitragen, besonders effizient auf die Navigationsdaten zuzugreifen.

In einer weiteren vorteilhaften Ausgestaltung des zweiten Aspekts der Erfindung wird ein Ausführungsplan erstellt abhängig von der Anweisung. Der entsprechende Datensatz wird abhängig von dem Ausführungsplan ermittelt. Dies trägt zu einem schnellen und effizienten Zugriff auf die Daten bei. In einer weiteren vorteilhaften Ausgestaltung des zweiten Aspekts der Erfindung werden die Zugriffe und/oder die entsprechenden Anweisungen und/oder die Ausführungspläne statistisch erfasst. Ferner werden die entsprechenden Anweisungen und/oder die Ausführungspläne gespeichert, wenn die Zugriffe und/oder die entsprechenden Anweisungen und/oder die entsprechenden Ausführungspläne mit einer vorgegebenen Häufigkeit auftreten. Dies trägt zu einem schnellen und effizienten Zugriff auf die Daten bei.

In einer weiteren vorteilhaften Ausgestaltung des zweiten Aspekts der Erfindung erfolgt der Zugriff auf die Datensätze mittels SQL. Dies ermöglicht, die umfangreichen Möglichkeiten von SQL zum Navigieren und/oder zum Ändern der Navigationsdaten zu nutzen. Ferner ermöglicht dies, für unterschiedliche Navigationsvorrichtungen gleiche Datenbanksysteme zu verwenden, die SQL verstehen.

Die Erfindung zeichnet sich aus bezüglich eines dritten Aspekts der Erfindung durch ein Computerprogrammprodukt. Das Computerprogrammprodukt umfasst ein computerlesbares Medium mit Programmanweisungen. Die Programmanweisungen sind durch einen Computer ausführbar. Ferner sind die Programmanweisungen ausgebildet zum Betreiben des Navigationssystems durch das Verfahren gemäß des zweiten Aspekts der Erfindung.

Die Erfindung ist im Folgenden anhand von schematischen Zeichnungen näher erläutert.

Es zeigen:
- Figur 1: eine schematische Darstellung eines Navigationssystems,
- Figur 2: ein Programm zum Betreiben des Navigationssystems,
- Figur 3: eine allgemeine Tabellenstruktur,

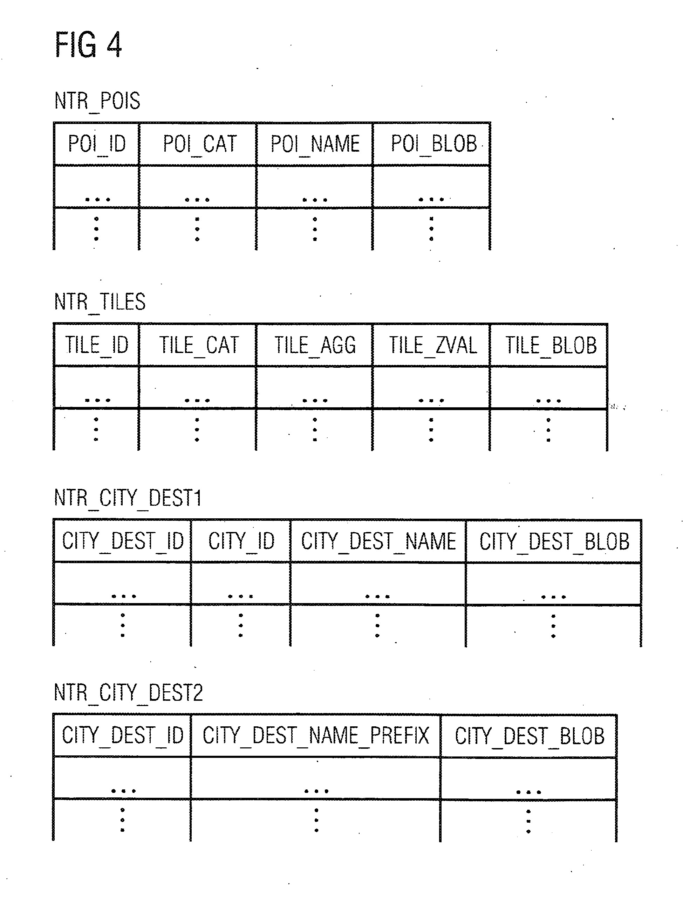

- Figur 4: fünf Ausführungsbeispiele der Tabellenstruktur,
- Figur 5: eine Tabelle mit einer der Tabellenstrukturen und drei Datensätzen.

Elemente gleicher Konstruktion oder Funktion sind figurenübergreifend mit den gleichen Bezugszeichen gekennzeichnet.

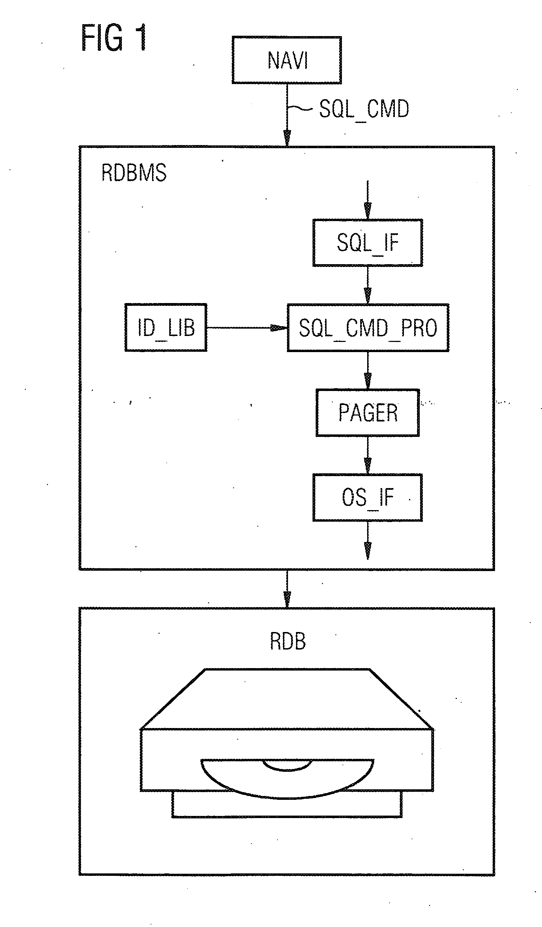

Ein Navigationssystem (Figur 1) umfasst eine Navigationsvorrichtung NAVI, ein Datenbankverwaltungssystem RDBMS und eine relationale Datenbank RDB. Das Navigationssystem dient zum Ermitteln einer Route und/oder zum Berechnen einer Strecke und/oder zum Finden eines Ortes und/oder zum Ermitteln weiterer Informationen.

Die Navigationsvorrichtung NAVI kann ein technisches Gerät sein, das beispielsweise in einem Kraftfahrzeug angeordnet ist. Alternativ kann die Navigationsvorrichtung NAVI auch ein Softwareprodukt sein, das von dem technischen Gerät verwendet wird. Das technische Gerät kann beispielsweise ein Bordcomputer eines Kraftfahrzeugs und/oder ein Computer sein, beispielsweise ein tragbarer Computer. Der tragbare Computer kann beispielsweise ein Computer im Taschenformat und/oder ein Laptop sein. Die Navigationsvorrichtung NAVI bzw. das technische Gerät, das die Navigationsvorrichtung NAVI umfasst, weisen Eingabeeinheiten und Ausgabeeinheiten auf. Die Eingabeeinheiten dienen zum Eingeben von Informationen, beispielsweise einer Route, die ermittelt werden soll, und/oder eines Zielorts und/oder Informationen, aufgrund derer Navigationsdaten geändert, insbesondere aktualisiert werden.

Die Navigationsvorrichtung NAVI kommuniziert mit dem Datenbankverwaltungssystem RDBMS. Das Datenbankverwaltungssystem RDBMS umfasst ein SQL-Interface SQL_IF, einen SQL-Befehls-Prozessor SQL_CMD_PRO, einen Pager PAGER, ein Verzeichnis ID_LIB von Indexstrukturen und ein Betriebssystem-Interface OS_IF.

Das Datenbankverwaltungssystem RDBMS kommuniziert mit der relationalen Datenbank RDB. In der relationalen Datenbank RDB sind die Navigationsdaten gespeichert.

Die Navigationsvorrichtung NAVI kommuniziert mit dem Datenbankverwaltungssystem RDBMS vorzugsweise derart, dass die Navigationsvorrichtung NAVI eine Anweisung SQL_CMD an das Datenbankverwaltungssystem RDBMS sendet. Alternativ kann die Anweisung SQL_CMD auch durch geeignete Signale repräsentiert werden, die dann in dem Datenbankverwaltungssystem RDBMS in die entsprechende Anweisung SQL_CMD übersetzt werden.

Das SQL-Interface SQL_IF dient dazu, zu überprüfen, ob die Anweisung SQL_CMD syntaktisch richtig ist. Falls die Anweisung SQL_CMD syntaktisch richtig ist, wird sie von dem SQL-Interface SQL_IF an den SQL-Befehls-Prozessor SQL_CMD_PRO übergegeben.

Der SQL-Befehls-Prozessor SQL_CMD_PRO ermittelt abhängig von der Anweisung SQL_CMD und vorzugsweise abhängig von mindestens einer verfügbaren Indexstruktur, die in dem Verzeichnis ID_LIB der Indexstrukturen hinterlegt ist, einen Software-Ausführungsplan EX_PLAN_SOFT. Der Software-Ausführungsplan EX_PLAN_SOFT ist ein Programmabschnitt, der dazu dient, den Zugriff auf die Navigationsdaten möglichst effizient zu gestalten.

Der Software-Ausführungsplan EX_PLAN_SOFT wird von dem SQL-Befehls-Prozessor SQL_CMD_PRO an den Pager PAGER übergeben. Der Pager PAGER dient dazu, abhängig von dem Software-Ausführungsplan EX_PLAN_SOFT einen Hardware-Ausführungsplan EX_PLAN_HARD zu ermitteln. Der Hardware-Ausführungsplan EX_PLAN_HARD ist repräsentativ dafür, wie eine Hardware, beispielsweise ein CD-ROM-Laufwerk und/oder eine Festplatte und/oder weitere Datenträger, die die relationale Datenbank RDB umfassen können, angesteuert werden müssen, um den Software-Ausführungsplan EX_PLAN_SOFT abzuarbeiten.

Der Hardware-Ausführungsplan EX_PLAN_HARD wird an die Betriebssystem-Schnittstelle OS_IF übergeben, welche den Hardware-Ausführungsplan EX_PLAN_HARD in entsprechende Stellsignale für das technische Gerät übersetzt, auf dem die Navigationsdaten gespeichert sind, und/oder das das Speichermedium umfasst, auf dem die Navigationsdaten gespeichert sind.

Ein Programm zum Betreiben des Navigationssystems ist vorzugsweise auf. einem Speichermedium des Navigationssystems gespeichert. Das Programm wird bevorzugt beim Starten des Navigationssystems in einem Schritt S1 gestartet, in dem gegebenenfalls Variablen initialisiert werden.

In einem Schritt S2 wird die Anweisung SQL_CMD ermittelt. Die Anweisung SQL-CMD wird beispielsweise ermittelt abhängig von einer zu bestimmenden Route und/oder abhängig von einem vorgegebenen Zielort und/oder zum Aktualisieren der Navigationsdaten und/oder zum Ermöglichen weiterer Zugriffe der Navigationsvorrichtung NAVI auf die relationale Datenbank RDB.

In einem Schritt S3 wird überprüft, ob die Anweisung SQL_CMD in Ordnung OK ist. Ist die Bedingung des Schrittes S3 nicht erfüllt, so wird die Bearbeitung erneut in dem Schritt S2 fortgesetzt. Ist die Bedingung des Schrittes S3 erfüllt, so wird die Bearbeitung in dem Schritt S4 fortgesetzt.

In dem Schritt S4 wird abhängig von der Anweisung SQL_CMD und abhängig von den zu Verfügung stehenden Indexstrukturen der Software-Ausführungsplan EX_PLAN_SOFT ermittelt.

In einem Schritt S5 wird der Hardware-Ausführungsplan EX_PLAN_HARD ermittelt abhängig von dem Software-Ausführungsplan EX_PLAN_SOFT.

In einem Schritt S6 wird das Stellsignal für das technische Gerät ermittelt, das die relationale Datenbank RDB umfasst.

In einem Schritt S7 kann das Programm beendet werden. Vorzugsweise wird das Programm jedoch in dem Schritt S2 fortgesetzt und erst beim Abschalten des Navigationssystems beendet.

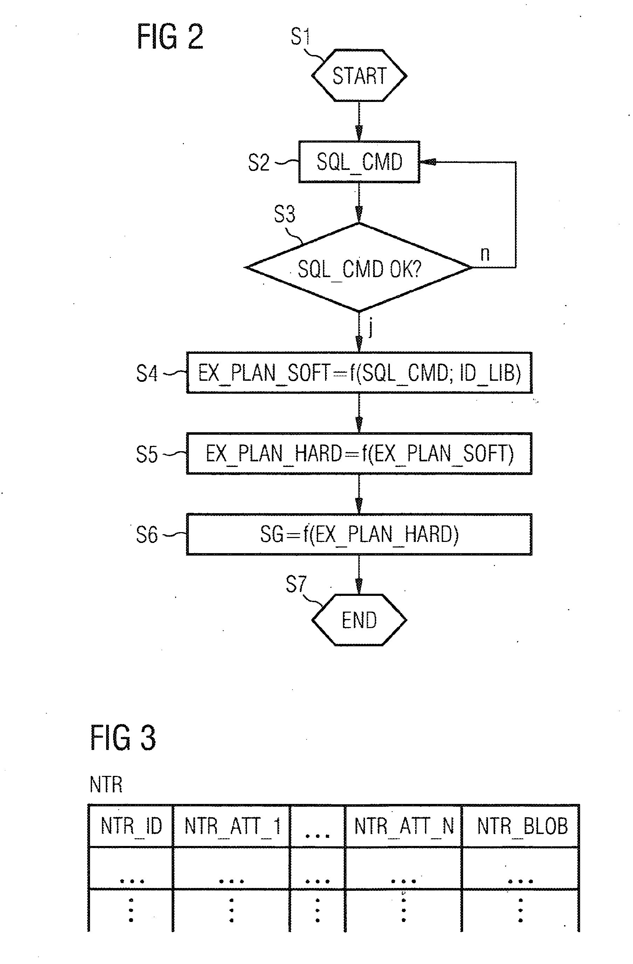

Die Navigationsdaten sind in der relationalen Datenbank RDB in Tabellen NTR abgespeichert. Die Tabellen NTR weisen eine allgemeine Tabellenstruktur auf und umfassen die Datensätze (Figur 3). Die allgemeine Tabellenstruktur weist jeweils mindestens eine eindeutige Kennung NTR_ID des Datensatzes, mindestens eine Eigenschaft NTR_ATT eines Datenpakets NTR_BLOB und das entsprechende Datenpaket NTR_BLOB auf. Vorzugsweise weist jeder Datensatz mehrere Eigenschaften NTR_ATT_1 bis NTR_ATT_N des entsprechenden Datenpakets NTR_BLOB auf. Die Daten des Datenpakets NTR_BLOB hängen bezüglich ihres Inhalts und/oder bezüglich ihrer räumlichen Anordnung auf dem Speichermedium zusammen. Das Datenpaket NTR_BLOB kann somit beispielsweise eine aneinandergereihte Abfolge von Zeichen, beispielsweise ein Binärcode, innerhalb einer großen Datenmenge sein, die beispielsweise die relationale Datenbank RDB repräsentiert. Die gesamten Daten eines Datensatzes oder die Daten ohne die Eigenschaften NTR_ATT des Datenpakets sind in dem Datenpaket NTR_BLOB gespeichert. Das Datenpaket NTR_BLOB enthält beispielsweise Namen und/oder grafische und/oder geografische Daten. Die geografischen Daten sind beispielsweise Längen- und/oder Breitengrade, die geografischen Daten können auch Höhenangaben, Seen, Flüsse und/oder andere geografische Daten sein. Die grafischen Daten sind beispielsweise ein Logo einer Firma und/oder eine typische Fassade eines Gebäudes.

Die allgemeine Tabellenstruktur ermöglicht es, Eigenschaften, insbesondere Vorteile der relationalen Datenbank RDB und einer proprietären Datenbank zu nutzen. Die proprietäre Datenbank ist eine Datenbank, die speziell für die Navigationsvorrichtung NAVI entwickelt wurde. Die Navigationsdaten sind so in der proprietären Datenbank gespeichert, dass auf die Navigationsdaten nur mit der entsprechenden Navigationsvorrichtungen NAVI mittels entsprechender proprietärer Zugriffsfunktionen zugegriffen werden kann.

Ein Vorteil der proprietären Datenbank ist beispielsweise, dass eine große Datenmenge mit relativ wenig Speicherplatzbelegung gespeichert werden kann. Ein Vorteil der relationalen Datenbank RDB ist beispielsweise, dass die Daten in der relationalen Datenbank RDB einfach und schnell gefunden und verändert, insbesondere aktualisiert werden können.

Jedes einzelne der Datenpakete NTR_BLOB repräsentiert eine eigene proprietäre Datenbank. Zum Auswerten der Datenpakete NTR_BLOB können die Datenpakete NTR_BLOB von dem Datenbankverwaltungssystem RDBMS an die Navigationsvorrichtung NAVI übergeben werden. Bevorzugt ermittelt jedoch die Navigationsvorrichtung NAVI die entsprechenden Zugriffsfunktionen und übergibt diese an das Datenbankverwaltungssystem RDBMS zum Auswerten der Navigationsdaten.

Mittels der Zugriffsfunktion kann das Datenpaket verändert werden. Dies ist vor allem bei einem Aktualisieren der Navigationsdaten sehr vorteilhaft. Wird beispielsweise lediglich die Richtung einer Einbahnstraße umgekehrt, so muss lediglich das entsprechende Datenpaket NTR_BLOB ausgetauscht werden. Alternativ kann es ausreichend sein, wenn die Zugriffsfunktion die Daten des Datenpakets NTR_BLOB aktualisiert.

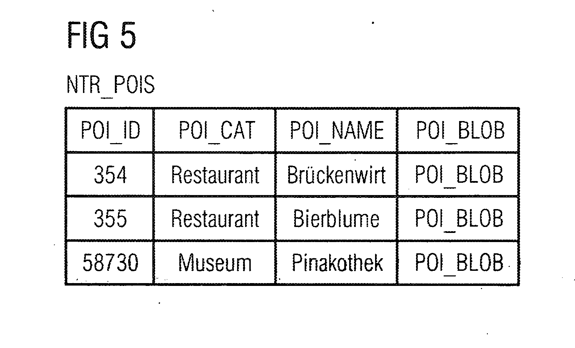

Falls beispielsweise mit Hilfe des Navigationssystems ein vorgegebener Ort gesucht werden soll, wird bevorzugt eine Tabelle interessanter Orte NTR_POIS mit einer Tabellenstruktur angelegt, die für die Suche nach interessanten Orten optimiert ist. Die Tabelle NTR_POIS der interessanten Orte umfasst ein Ortsdatenpaket POI_BLOB und als Eigenschaften des Ortsdatenpakets POI_BLOB eine Ortskennung POI_ID und vorzugsweise eine Ortskategorie POI_CAT und/oder einen Ortsnamen POI_NAME. Die Tabelle interessanter Orte NTR_POIS wird später anhand der Figur 5 näher erläutert.

Die relationale Datenbank RDB kann auch dazu genutzt werden, einen vorgegebenen Kartenausschnitt zu finden. Dazu wird vorzugsweise eine Kartentabelle NTR_TILES angelegt, deren Tabellenstruktur dafür optimiert ist den vorgegebenen Kartenausschnitt zu finden. Die Kartentabelle NTR_TILES umfasst ein Kartendatenpaket TILE_BLOB, eine Kartenkennung TILE_ID, vorzugsweise eine Kartenkategorie TILE_CAT und/oder einen Karten-Aggregationslevel TILE_AGG und/oder einen Karten-Z-Wert TILE_ZVAL. Die Kartenkategorie TILE_CAT kann beispielsweise dafür repräsentativ sein, ob die entsprechende Karte zum Bestimmen eines interessanten Ortes oder zum Bestimmen einer vorgegebenen Route optimiert ist. Der Karten-Aggregationslevel TILE_AGG kann beispielsweise einen Vergrößerungsfaktor der entsprechenden Karte berücksichtigen. Beispielsweise kann bei einem ersten Karten-Aggregationslevel TILE_AGG ganz Deutschland durch sechs Karten überdeckt sein und bei einem zweiten Karten-Aggregationslevel TILE_AGG ist ganz Deutschland durch sechzig Karten überdeckt. Der Karten-Z-Wert TILE_ZVAL ist bevorzugt repräsentativ für die Koordinaten, auf die sich die Karte bezieht. Beispielsweise kann ein erstes Segment des Karten-Z-Werts TILE_ZVAL einer X-Koordinate eines ersten Ecks der entsprechenden Karte repräsentieren, ein zweites Segments kann ein Y-Koordinate des ersten Ecks der Karte repräsentieren und ein drittes und ein viertes Segment repräsentieren die Koordinaten einer zweiten Ecke der entsprechenden Karte.

Die Tabelle NTR mit der allgemeinen Tabellenstruktur kann auch dazu verwendet werden, einem Benutzer des Navigationssystems eine Eingabehilfe zur Verfügung zu stellen.

Beispielsweise kann eine erste Zielorttabelle NTR_CITY_DEST1 eine Tabellenstruktur aufweisen, die darauf optimiert ist, dem Anwender bei Eingabe eines Buchstabens beispielsweise eines Zielortnamens den nächsten möglichen Buchstaben des Zielortnamens vorzuschlagen. Dazu umfasst die erste Zielorttabelle NTR_CITY_DEST1 ein Zielortdatenpaket CITY_DEST_BLOB, eine Zielortkennung CITY_DEST_ID und bevorzugt eine Städtenamenkennung CITY_ID und/oder einen Zielortnamen CITY_DEST_NAME. Bei Vorgabe einer geeigneten Indexstruktur kann nun einfach nach dem jeweils nächsten Buchstaben des einzugebenden Zielortnamens CITY_DEST_NAME gesucht werden. Dazu könnte das Zielortdatenpaket CITY_DEST_BLOB leer sein. Bevorzugt enthält das Zielortdatenpaket CITY_DEST_BLOB jedoch die grafischen und/oder geografischen Daten des entsprechenden Zielorts.

Alternativ oder zusätzlich können zum Bestimmen des nächsten Buchstabens des Zielortnamens die Datensätze in einer zweiten Zielorttabelle NTR_CITY_DEST2 angeordnet sein, deren Tabellenstruktur darauf optimiert ist, dem Anwender bei Eingabe des ersten Buchstabens des Zielortnamens den nächsten möglichen Buchstaben des Zielortnamens vorzuschlagen. Die zweite Zielorttabelle NTR_CITY_DEST2 umfasst das Zielortdatenpaket CITY_DEST_BLOB, die Zielortkennung CITY_DEST_ID und bevorzugt einen Zielortnamenanfang CITY_DEST_NAME_PREFIX. Ist der Zielortnamenanfang CITY_DEST_NAME_PREFIX beispielsweise ein M, so können in dem Zielortdatenpaket CITY_DEST_BLOB alle Städte mit dem Anfangsbuchstaben M abgelegt sein. Das Datenbankverwaltungssystem RDBMS kann nun einfach und schnell nach dem Zielortnamenanfang CITY_DEST_NAME_PREFIX suchen. Ist das entsprechende Zielortdatenpaket CITY_DEST_BLOB gefunden, so kann es mit Hilfe der Zugriffsfunktion, die dem Datenbankverwaltungssystem RDBMS von der Navigationsvorrichtung NAVI übergeben wurde, ausgewertet werden. Alternativ kann das Zielortdatenpaket CITY_DEST_BLOB von dem Datenbankverwaltungssystem RDBMS an die Navigationsvorrichtung NAVI übergeben werden und in der Navigationsvorrichtung NAVI mit der entsprechenden Zugriffsfunktion ausgewertet werden. Bei der Verwendung der zweiten Zielorttabelle NTR_CITY_DEST2 wird viel weniger Speicherplatz benötigt als bei der ersten Zielorttabelle NTR_CITY_DEST1. Darüber hinaus können die entsprechenden Indexstrukturen einfacher ausgebildet sein. Die entsprechende Zugriffsfunktion muss jedoch umfangreicher ausgebildet sein.

Die Tabelle NTR_POIS interessanter Orte (Figur 5) umfasst Spalten und Zeilen. In der ersten Zeile stehen die Eigenschaften NTR_ATT, die sich auf das Ortsdatenpaket POI_BLOB beziehen. Unter der Ortskennung POI_ID 354 ist das Restaurant Brückenwirt abgelegt. Die räumliche Lage des Restaurants Brückenwirt ist in dem entsprechenden Ortsdatenpaket POI_BLOB abgelegt. Ferner enthält die Tabelle NTR_POI interessanter Orte das Restaurant Bierblume mit der Ortskennung POI_ID 355. Zusätzlich zu der geografischen Lage sind in dem entsprechenden Ortsdatenpaket POI_BLOB beispielsweise noch Spezialitäten des Hauses abgelegt. Die Ortskennung POI_ID 58730 ist repräsentativ für ein Museum, beispielsweise die Pinakothek in München. Die geografische Lage und/oder beispielsweise Eintrittspreise und/oder Öffnungszeiten sind in dem entsprechenden Ortsdatenpaket POI_BLOB abgelegt.

Die maximale Größe der Datenpakete NTR_BLOB und die Anzahl von Zeilen und Spalten sowie die Anzahl der Tabellen NTR in der relationalen Datenbank RDB können abhängig von der Navigationsvorrichtung NAVI optimiert werden. Dabei gilt prinzipiell, je größer die Datenpakete NTR_BLOB sind, desto geringer kann der benötigte Speicherplatz sein. Je kleiner die Datenpakete NTR_BLOB sind, desto einfacher können die entsprechenden Zugriffsfunktionen ausgebildet sein.

Die Erfindung ist nicht auf die angegebenen Ausführungsbeispiele beschränkt. Die Navigationsvorrichtung NAVI, das Datenbankverwaltungssystem RDBMS und/oder die relationale Datenbank RDB können aus einzelnen Hardwarekomponenten gebildet sein und/oder aus einzelnen Softwarekomponenten gebildet sein und/oder als einzelne Komponenten einer einzigen Anwendung ausgebildet sein. Ferner kann das Verfahren zum Betreiben des Navigationssystems teilweise oder ganz in einem Computerprogrammprodukt oder in einem Hardware-Produkt oder in einer Kombination aus Computerprogrammprodukt und Hardware-Produkt implementiert sein. Ein computerlesbares Medium kann das Computerprogrammprodukt mit Programmanweisungen umfassen, die durch einen Computer ausführbar sind, zum Abarbeiten des erfindungsgemäßen Verfahrens. Das computerlesbare Medium kann beispielsweise eine CD-ROM, eine DVD, eine Flash-Memory-Card, eine Festplatte und/oder ein anderes computerlesbares Medium sein, beispielsweise ein Speichermedium innerhalb eines Netzwerks.

## Patentansprüche

1. Navigationssystem, das eine Navigationsvorrichtung (NAVI), eine relationale Datenbank (RDB) und ein Datenbankverwaltungssystem (RDBMS) umfasst und das dazu ausgebildet ist, auf Navigationsdaten zuzugreifen, die in der relationalen Datenbank (RDB) als einzelne Datensätze gespeichert sind, die jeweils mindestens ein Datenpaket (NTR_BLOB), jeweils mindestens eine Eigenschaft (NTR_ATT) des entsprechenden Datenpakets (NTR_BLOB) und jeweils eine eindeutige Kennung .(NTR_ID) des entsprechenden Datensatzes umfassen, **dadurch gekennzeichnet, dass** jedes einzelne des Datenpakete (NTR_BLOB) eine eigene proprietäre Datenbank repräsentiert.

2. Verfahren zum Betreiben eines Navigationssystems gemäß Anspruch 1, bei dem mittels des Datenbankverwaltungssystems (RDBMS) auf die Navigationsdaten in der relationalen Datenbank (RDB) zugegriffen wird abhängig von einer Anweisung (SQL_CMD) der Navigationsvorrichtung (NAVI) und bei dem die Navigationsvorrichtung (NAVI) mit Hilfe mindestens einer vorgegebenen Zugriffsfunktion auf Daten des Datenpakets (NTR_BLOB), das die proprietäre Datenbank repräsentiert, zugreift.

3. Verfahren nach Anspruch 2, bei dem das Datenpaket (NTR_ BLOB) komprimiert wird und dann gespeichert wird.

4. Verfahren nach einem der Ansprüche 2 oder 3, bei dem das Datenpaket (NTR_BLOB) Namen und/oder geographische und/oder graphische Daten enthält.

5. Verfahren nach einem der Ansprüche 2 bis 4, bei dem die vorgegebene Zugriffsfunktion dem Datenbankverwaltungssystem (RDBMS) übergeben wird zum Zugreifen auf die Daten des Datenpakets (NTR_BLOB).

6. Verfahren nach einem der Ansprüche 2 oder 5, bei dem die Zugriffsfunktion eingesetzt wird zum Ändern der Daten des Datenpakets (NTR_ BLOB).

7. Verfahren nach einem der Ansprüche 2 bis 6, bei dem
- die Anweisung (SQL_CMD) an das Datenbankverwaltungssystem (RDBMS) ermittelt wird abhängig von einer Zugriffsart der Navigationsvorrichtung (NAVI) auf die Navigationsdaten,
- abhängig von der Anweisung (SQL_CMD) der entsprechende Datensatz ermittelt wird,
- das Datenpaket (NTR_ BLOB) des entsprechenden Datensatzes ausgewertet wird, zum Ermitteln der Navigationsdaten.

8. Verfahren nach einem der Ansprüche 2 bis 7, bei dem der Datensatz, ermittelt wird abhängig von einer vorgegebenen Indexstruktur (ID_ LIB).

9. Verfahren nach einem der Ansprüche 2 bis 8, bei dem ein Ausführungsplan (EX_PLAN_SOFT, EX_PLAN_HARD) erstellt wird abhängig von der Anweisung (SQL_CMD) und der entsprechende Datensatz abhängig von dem Ausführungsplan (EX_PLAN_SOFT, EX_PLAN_HARD) ermittelt wird.

10. Verfahren nach einem der Ansprüche 2 bis 9, bei dem die Zugriffe und/oder die entsprechenden Anweisungen (SQL_CMD) und/oder die Ausführungspläne (EX_PLAN_SOFT, EX_PLAN_HARD) statistisch erfasst werden und bei dem die entsprechenden Anweisungen (SQL_CMD) und/oder die Ausführungspläne (EX_PLAN_SOFT, EX_PLAN_HARD) gespeichert werden, wenn die Zugriffe und/oder die entsprechenden Anweisungen (SQL_ CMD) und/oder die Ausführungspläne (EX_PLAN_SOFT, EX_PLAN_HARD) mit einer vorgegebenen Häufigkeit auftreten.

11. Verfahren nach einem der Ansprüche 2 bis 10, bei dem der Zugriff auf die Datensätze mittels SQL erfolgt.

12. Computerprogrammprodukt, das ein computerlesbares Medium mit Programmanweisungen umfasst, die durch einen Computer ausführbar sind und die ausgebildet sind zum Betreiben eines Navigationssystems nach Anspruch 1 durch die Schritte eines Verfahrens nach einem der Ansprüche 2 bis 11.

## Claims

1. Navigation system which comprises a navigation apparatus (NAVI), a relational database (RDB) and a database management system (RDBMS) and which is designed to access navigation data which are stored in the relational database (RDB) as individual data records which comprise at least one respective data packet (NTR_BLOB), at least one respective property (NTR_ATT) of the relevant data packet (NTR_BLOB) and a respective unique identifier (NTR_ID) of the relevant data record, **characterized in that** each individual data packet (NTR_BLOB) represents a dedicated proprietary database.

2. Method for operating a navigation system according to Claim 1, in which the database management system (RDBMS) is used to access the navigation data in the relational database (RDB) on the basis of an instruction (SQL_CMD) from the navigation apparatus (NAVI) and in which the navigation apparatus (NAVI) uses at least one prescribed access function to access data in the data packet (NTR_BLOB), which represents the propriety database.

3. Method according to Claim 2, in which the data packet (NTR_BLOB) is compressed and then stored.

4. Method according to one of Claims 2 and 3, in which the data packet (NTR_BLOB) contains names and/or geographical and/or graphical data.

5. Method according to one of Claims 2 to 4, in which the prescribed access function is transferred to the database management system (RDBMS) for the purpose of accessing the data in the data packet (NTR_BLOB).

6. Method according to one of Claims 2 or 5, in which the access function is used to change the data in the data packet (NTR_BLOB).

7. Method according to one of Claims 2 to 6, in which
- the instruction (SQL_CMD) to the database management system (RDBMS) is ascertained on the basis of a type of access by the navigation apparatus (NAVI) to the navigation data,
- the instruction (SQL_CMD) is taken as a basis for ascertaining the relevant data record,
- the data packet (NTR_BLOB) in the relevant data record is evaluated, for the purpose of ascertaining the navigation data.

8. Method according to one of Claims 2 to 7, in which the data record is ascertained on the basis of a prescribed index structure (ID_LIB).

9. Method according to one of Claims 2 to 8, in which an execution plan (EX_PLAN_SOFT, EX_PLAN_HARD) is created on the basis of the instruction (SQL_CMD), and the relevant data record is ascertained on the basis of the execution plan (EX_PLAN_SOFT, EX_PLAN_HARD).

10. Method according to one of Claims 2 to 9, in which the access operations and/or the relevant instructions (SQL_CMD) and/or the execution plans (EX_PLAN_SOFT, EX_PLAN_HARD) are recorded randomly and in which the relevant instructions (SQL_CMD) and/or the execution plans (EX_PLAN_SOFT, EX_PLAN_HARD) are stored if the access operations and/or the relevant instructions (SQL_CMD) and/or the execution plans (EX_PLAN_SOFT, EX_PLAN_HARD) occur with a prescribed frequency.

11. Method according to one of Claims 2 to 10, in which the data records are accessed using SQL.

12. Computer program product which comprises a computer-readable medium having program instructions which can be executed by a computer and which are designed for the operation of a navigation system according to Claim 1 by the steps of a method according to one of Claims 2 to 11

## Revendications

1. Système de navigation qui comprend un dispositif (NAVI) de navigation, une base (RDB) de données relationnelles et un système (RDBMS) de gestion de base de données et qui est constitué pour accéder à des données de navigation qui sont mémorisées dans la base (RDB) de données relationnelles sous la forme de jeux de données individuelles qui comprennent respectivement au moins un paquet (NTR_BLOB), respectivement au moins une propriété (NTR_ATT) du paquet (NTR_BLOB) de données correspondant et respectivement une caractérisation (NTR_ID) claire du jeu de données correspondant, **caractérisé en ce que** chacun des paquets (NTR_BLOB) de données individuels représente une base de données privée propre.

2. Procédé pour faire fonctionner un système de navigation suivant la revendication 1,
dans lequel on accède au moyen du système (RDBMS) de gestion de base de données aux données de navigation dans la base (RDB) de données relationnelles en fonction d'une instruction (SQL_CMD) du dispositif (NAVI) de navigation et dans lequel le dispositif (NAVI) de navigation accède à l'aide d'au moins une fonction d'accès prescrite à des données du paquet (NTR_BLOB) qui représente la base de données privée.

3. Procédé suivant la revendication 2,
dans lequel on comprime le paquet ((NTR_BLOB) de données, puis on le mémorise.

4. Procédé suivant l'une des revendications 2 ou 3,
dans lequel le paquet (NTR_BLOB) de données contient des noms et/ou des données géographiques et/ou graphiques.

5. Procédé suivant l'une des revendications 2 à 4,
dans lequel la fonction d'accès prescrite est transmise au système (RDBMS) de gestion de base de données pour accéder aux données du paquet (NTR_BLOB) de données.

6. Procédé suivant l'une des revendications 2 ou 5,
dans lequel on utilise la fonction d'accès pour modifier les données du paquet (NTR_BLOB) de données.

7. Procédé suivant l'une des revendications 2 à 6,
dans lequel
- on détermine l'instruction (SQL_CMD) au système (RDBMS) de gestion de base de données en fonction d'un type d'accès du dispositif (NAVI) de navigation aux données de navigation,
- en fonction de l'instruction (SQL_CMD) on détermine le jeu de données correspondant,
- on exploite le paquet (NTR_BLOB) de données du jeu de données correspondant pour la détermination des données de navigation.

8. Procédé suivant l'une des revendications 2 à 7,
dans lequel on détermine le jeu de données en fonction d'une structure (ID_LIB) d'indice prescrite.

9. Procédé suivant l'une des revendications 2 à 8,
dans lequel on établit un plan (EX_PLAN_SOFT, EX_PLAN_HARD) d'exécution en fonction de l'instruction (SQL_CMD) et on détermine le jeu de données correspondant en fonction du plan (EX_PLAN_SOFT, EX_PLAN_HARD) d'exécution.

10. Procédé suivant l'une des revendications 2 à 9,
dans lequel on détecte statistiquement les accès et/ou les instructions (SQL_CMD) et/ou les plans (EX_PLAN_SOFT, EX_PLAN_HARD) d'exécution et dans lequel on mémorise les instructions (SQL_CMD) correspondantes et/ou les plans (EX_PLAN_SOFT, EX_PLAN_HARD) d'exécutions si les accès et/ou les instructions (SQL_CMD) correspondantes et/ou les plans (EX_PLAN_SOFT, EX_PLAN_HARD) d'exécutions se produisent à une fréquence prescrite.

11. Procédé suivant l'une des revendications 2 à 10,
dans lequel l'accès aux bases de données s'effectue au moyen de SQL.

12. Produit de programme d'ordinateur, qui comprend un support pouvant être exploité par ordinateur et ayant des indications de programme qui peuvent être réalisées par un ordinateur et qui sont conçues pour faire fonctionner un système de navigation suivant la revendication 1 par les stades d'un procédé suivant l'une des revendications 2 à 11.
